# EUROPÄISCHE PATENTANMELDUNG

(11) **EP 1 639 890 A1**
(43) Veröffentlichungstag der Anmeldung: **29.03.2006**
(21) Anmeldenummer: 05106336.0
(22) Anmeldetag: 11.07.2005
(51) Int. Cl.: A01K 61/00, A47L 1/06

(54) **Magnetischer Scheibenreiniger für Aquarien**

(30) Priorität: 22.09.2004 DE 102004045798
(71) Anmelder: Krauss, Renate, 30851 Langenhagen (DE)
(72) Erfinder: Krauß, Uwe, 30851, Langenhagen (DE)
(74) Vertreter: Taruttis, Stefan Georg

(57) **Zusammenfassung**

Erfindungsgemäß wird ein zweiteiliger Scheibenreiniger für Aquarien bereitgestellt, dessen beide Elemente durch Magnetkraft gegeneinander gezogen werden, selbst wenn sie durch eine zwischen sich angeordnete Glasscheibe, beispielsweise eine Aquarienwand, voneinander beabstandet sind. Die erfindungsgemäße Reinigungsvorrichtung, die ein Element des magnetischen Scheibenreinigers darstellt, weist eine Schabeklinge (2) auf. Die Reinigungsvorrichtung haltert die Schabeklinge so, dass sie in einem Winkel gegen die zu reinigende Oberfläche federnd gepresst werden kann.

## Beschreibung

### Magnetischer Scheibenreiniger für Aquarien

Die vorliegende Erfindung betrifft einen magnetischen Scheibenreiniger, mit dem durchsichtige Bereiche von Aquarien, beispielsweise Glasscheiben, gereinigt werden können.

### Stand der Technik

Ein gattungsgemäßer magnetischer Scheibenreiniger ist aus der WO 00/40080 bekannt, der aus zwei Elementen besteht, die durch Magnetkraft gegeneinander gezogen werden, selbst wenn sie durch eine dazwischen angeordnete Glasscheibe voneinander beabstandet sind. Auf diese Weise folgt ein Element der Bewegung des jeweils anderen, so dass durch Bewegung des einen Elements außerhalb des Aquariums das andere zur Reinigung innerhalb eines ansonsten nur schwer zugänglichen Bereichs hinter einer Glasscheibe bewegt werden kann. Für die Anwendung zur Reinigung von Innenseiten von Aquariumscheiben ist ein Element schwimmfähig, so dass es nach dem Abbruch der magnetischen Anziehungskraft zum anderen Element innerhalb des Aquariums aufschwimmt und auf einfache Weise entnommen werden kann.

Die Reinigungswirkung wird dadurch erzielt, dass das auf der Wasserseite des Aquariums anzuordnende schwimmfähige magnetische Element eine raue Oberfläche aufweist, die in Kontakt mit der Glasscheibe zu bringen ist.

Weiterhin ist bekannt, die inneren Oberflächen von Glasscheiben eines Aquariums mit einer Schabeklinge zu reinigen, die manuell zu führen ist. An dieser Schabeklinge ist nachteilig, dass sie manuell innerhalb des Aquariums bewegt werden muss, so dass der Anwender entweder einen nassen Arm bekommt, oder durch Verlängerung des Griffs ein schwer handhabbares Instrument einsetzen muss.

Bei dem bekannten Reinigungsgerät besteht ein Nachteil darin, dass die Reinigungswirkung durch die raue Oberfläche unzureichend ist, insbesondere zur Entfernung von Kalkalgen, wie sie insbesondere bei Seewasseraquarien auftreten.

### Aufgabe der Erfindung

Gegenüber den bekannten Vorrichtungen zur Reinigung von Innenseiten von Aquarienscheiben stellt sich der vorliegenden Erfindung die Aufgabe, eine Vorrichtung mit verbesserter Reinigungswirkung bereitzustellen. Dabei ist es insbesondere Aufgabe der vorliegenden Erfindung, die Nachteile der bekannten Scheibenreiniger zu vermeiden.

### Allgemeine Beschreibung der Erfindung

Erfmdungsgemäß wird ein zweiteiliger Scheibenreiniger für Aquarien bereitgestellt, dessen beide Elemente durch Magnetkraft gegeneinander gezogen werden, selbst wenn sie durch eine zwischen sich angeordnete Glasscheibe, beispielsweise eine Aquarienwand, voneinander beabstandet sind. Dabei ist es bevorzugt, dass das Element, welches innerhalb des Aquariums eingesetzt wird, nachfolgend auch als Reinigungsvorrichtung bezeichnet, schwimmfähig ist, wenn die magnetische Anziehungskraft zum anderen Element unterbrochen wird.

Die magnetische Anziehungskraft zwischen der Reinigungsvorrichtung und dem Führungselement wird dadurch bereitgestellt, dass jeweils eines dieser Elemente einen Eisenkern und das andere einen Magnet, oder beide Magneten enthalten.

Die erfindungsgemäße Reinigungsvorrichtung, die ein Element eines magnetischen Scheibenreinigers darstellt, weist eine Schabeklinge auf. Die Reinigungsvorrichtung haltert die Schabeklinge so, dass sie in einem Winkel gegen die zu reinigende Oberfläche federnd gepresst werden kann. Dabei kann die Haltevorrichtung, die die Schabeklinge an der Reinigungsvorrichtung haltert, auch separat dazu verwendet werden, um einen herkömmlichen magnetischen Scheibenreiniger dadurch zu einer erfindungsgemäßen Reinigungsvorrichtung zu machen. Dazu wird die Haltevorrichtung mit Schabeklinge, Klingenträger und Abdeckplatte, wie nachfolgend beschreiben, mit einem herkömmlichen Reinigungselement verbunden, beipielsweise durch Kleben oder Schrauben verbunden. Dann entspricht das herkömmliche Reinigungselement im wesentlichen dem nachfolgend als Reinigungselement bezeichneten Bauteil mit rauer Oberfläche.

In einer ersten Ausführungsform weist die Reinigungsvorrichtung zusätzlich ein Reinigungselement auf, das mit einer rauen Reinigungsfläche versehen sein kann, die in der Ebene der zu reinigenden Fläche, d.h. in der Ebene der federnd gehalterten Schabeklinge angeordnet ist. Auf diese Weise kombiniert die erfindungsgemäße magnetische Reinigungsvorrichtung die Reinigungswirkung einer rauen Oberfläche mit der einer Schabeklinge, was insbesondere zur Entfernung hartnäckiger Beläge auf Aquarienscheiben, beispielsweise Kalkalgen, geeignet ist.

Die erfindungsgemäße magnetische Reinigungsvorrichtung verwendet als raue Oberfläche des Reinigungselements Kunststofffasern und/oder Gewebe, als Schabeklinge ein Messer, vorzugsweise aus gehärtetem Metall, das zumindest eine geradlinige Schabekante aufweist.

In einer alternativen zweiten Ausführungsform weist die Reinigungsvorrichtung zusätzlich oder in Alternative zu einem Reinigungselement mit einer Reinigungsoberfläche, die in der Ebene der Kante der Schabeklinge angeordnet ist, zumindest ein Tragrad, vorzugsweise zwei, drei oder vier Tragräder auf. Bei dieser Ausführungsform dient das zumindest eine Tragrad dazu, die Haltevorrichtung für die Schabeklinge in einem Abstand zu der zu reinigenden Oberfläche anzuordnen. Diese Ausführungsform bietet den Vorteil, dass der Kraftaufwand zum Bewegen des Reinigungselements im Wesentlichen zur Bewegung der Schabeklinge über die zu reinigende Oberfläche zur Verfügung steht, weil die Haftreibung einer rauen Reinigungsfläche vermindert bzw. ganz aufgehoben und durch das Abrollen des zumindest einen Tragrads ersetzt wird. In der zweiten Ausführungsform können der Magnet oder Eisenkern für die magnetische Anziehung zum Führungselement in einem oder mehreren Tragrädern enthalten sein, alternativ in einem zusätzlichen Halteelement oder mit der Haltevorrichtung verbunden sein.

### Genaue Beschreibung der Erfindung

Die Schabeklinge des erfindungsgemäßen magnetischen Scheibenreinigers wird dadurch in der Ebene der Reinigungsfläche des Reinigungselements gehalten, dass sie auf einem Klingenträger gehaltert ist, so dass die Schabeklinge in einem Winkel, beispielsweise von 20 bis 80 Grad zur Ebene der Reinigungsoberfläche des Reinigungselements geneigt ist. Dabei stellt der Klingenträger einen Abstand der Schabeklinge zum Reinigungselement her, so dass Partikel wie Aquariumkies nicht zwischen Reinigungselement und Klingenträger bzw. Schabeklinge eingeklemmt werden können, sondern frei herausrutschen.

In bevorzugter Ausführungsform ist die Schabeklinge auf dem Klingenträger senkrecht zu ihrer Schabekante verschieblich angeordnet und, besonders bevorzugt, von einer Abdeckplatte so überdeckt, dass im Wesentlichen nur die Schabekante der Schabeklinge in der Ebene der Reinigungsoberfläche des Reinigungselements angeordnet und zugänglich ist, während die Zugänglichkeit aus anderen Richtungen durch eine darüber angeordnete Abdeckplatte stark eingeschränkt bzw. unterbunden wird. Diese Schutzwirkung der Abdeckplatte kann beispielsweise dadurch erfolgen, dass die Abdeckplatte in dem Bereich, in dem sie der Schabekante der Schabeklinge nahe kommt, eine Fase aufweist, so dass die Schabekante der Schabeklinge im Wesentlichen nur unterhalb der Fase der Abdeckplatte zugänglich ist, ansonsten von der überstehenden Abdeckplatte abgeschirmt wird.

Die Erfindung wird nun genauer mit Bezug auf die angehängten Figuren beschrieben, in denen
- Figur 1 schematisch eine erfindungsgemäße magnetische Reinigungsvorrichtung gemäß der ersten Ausführungsform zeigt,
- Figuren 2A bis D schematisch erfmdungsgemäße Reinigungsvorrichtungen gemäß der zweiten Ausführungsform zeigen,
- Figur 3 eine alternative Ausführungsform eines erfindungsgemäßen magnetischen Reinigungsvorrichtung gemäß der ersten Ausführungsform in schematischer Schnittansicht zeigt,
- Figur 4 beispielhaft einen Klingenträger in Draufsicht zeigt,
- Figur 5 den Klingenträger von Figur 4 in Seitenansicht zeigt,
- Figur 6 schematisch eine Abdeckplatte in Draufsicht zeigt und
- Figur 7 die Abdeckplatte von Figur 6 im Schnitt zeigt.

Der erfindungsgemäße magnetische Scheibenreiniger besteht aus zwei Elementen, die durch magnetische Anziehungskraft gegeneinander gezogen werden, selbst wenn sie durch eine zwischen sich angeordnete Glasscheibe auf Abstand gehalten werden. Ein als Führungselement zu bezeichnendes Element, das zur manuellen Handhabung auf der trockenen Außenseite eines Aquariums vorgesehen ist, kann aus einem Magnet oder Eisenteil bestehen und zur Vermeidung von Kratzern auf der äußeren Oberfläche einer zu reinigenden Scheibe abgepolstert sein, beispielsweise durch eine Textillage, vorzugsweise Mikrofaserflies. Weiterhin kann dieses äußere Führungselement zur besseren Handhabung Griffflächen aufweisen.

Das durch Magnetkraft gehaltene Gegenstück zum Führungselement, nämlich die Reinigungsvorrichtung, weist entsprechend einen Eisenkern bzw. einen Magneten auf, der in Wechselwirkung mit dem Führungselement eine ausreichend hohe Anziehungskraft entwickelt, sodass die Reinigungsvorrichtung auf der Innenseite einer Aquariumscheibe Bewegungen des Führungselements auf der Außenseite folgt und einer mit ausreichender Kraft auf der Innenseite aufliegt, sodass Schabeklinge und ggf. eine Reinigungsoberfläche gegen anhaftende Verunreinigungen geführt werden können und diese entfernen.

In der alternativen zweiten Ausführungsform ist der Eisenkern bzw. Magnet, der in Wechselwirkung mit dem Führungselement zur magnetischen Anziehung der Reinigungsvorrichtung, insbesondere der Schabeklinge, gegen die Ebene der zu reinigenden Oberfläche führt, mit der Haltevorrichtung 10 verbunden, mit der die Schabeklinge 2, beispielsweise mittels eines Klingenträgers 1, in einem Winkel verbunden ist. Dazu kann ein Halteelement 14 vorgesehen sein, das mit der Haltevorrichtung 10 verbunden ist, wobei zumindest ein Tragrad 13 an der Haltevorrichtung 10 und/oder dem Halteelement 14 drehbar gelagert ist. Dabei ist vorgesehen, dass die Drehachse 15 der Tragräder 13 parallel zur Schabekante 2a der Schabeklinge 2 ausgerichtet ist.

In der zweiten Ausführungsform liegt ein besonderer Vorteil der vorliegenden Erfmdung darin, dass die erforderliche magnetische Anziehungskraft zwischen Reinigungsvorrichtung und Führungselement zur Erzielung einer Reinigungswirkung geringer sein kann, als bei dem bekannten magnetischen Scheibenreiniger, der ausschließlich eine Reinigungsoberfläche aufweist. Bei der ersten Ausführungsform lässt sich mit der kombinierten Wirkung von Schabeklinge 2 und Reinigungsoberfläche 12 eine gegenüber der bekannten Reinigungsoberfläche allein eine verbesserte Reinigungswirkung bei gleicher magnetischer Anziehungskraft erzielen. Dies beruht in erster und zweiter Ausführungsform auf der Reinigungswirkung der Schabeklinge, mit der auch bei geringerer Anpresskraft auf die Innenseite der Aquariumscheibe eine gute Reinigungswirkung selbst gegenüber festsitzenden Verunreinigungen erzielt werden kann. Dies wird unter anderem darauf zurückgeführt, dass die aufgebrachte Magnetkraft, mit der das Reinigungselement gegen die Aquariumscheibe gezogen wird, zu einem wesentlichen Teil auf die Schabeklinge wirkt, die aufgrund ihrer geringen Auflagefläche der Schabekante einen hohen Anpressdruck erreicht, während die ungleich größere Reinigungsoberfläche mit verhältnismäßig geringem Druck auf der Scheibenoberfläche anliegt.

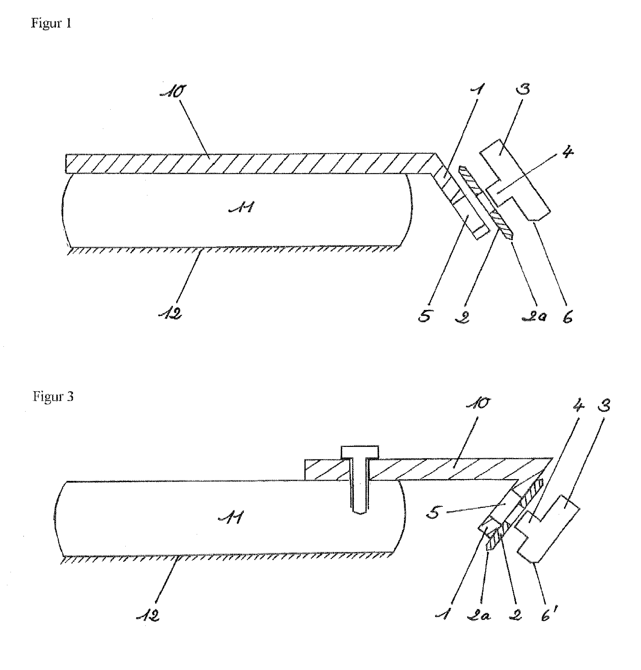

In Figur 1 ist eine schematische Ansicht einer beispielhaften erfindungsgemäßen Reinigungsvorrichtung für einen zweiteiligen magnetischen Scheibenreiniger gezeigt, während das Führungselement, das nur zur Aufrechterhaltung der magnetischen Anziehungskraft dient, mit der die Reinigungsvorrichtung gegen die Innenseite einer Aquariumscheibe gezogen wird, nicht dargestellt ist.

Der Klingenträger 1 dient zur Halterung einer Schabeklinge 2. Die Schabeklinge 2 wird von einer Abdeckplatte 3 einseitig überdeckt, wobei die Abdeckplatte 3 mindestens einen Zapfen 4 aufweist, der durch eine Bohrung der Schabeklinge 2 geführt werden kann und in einem Langloch 5 des Klingenträgers 1 geführt werden kann. Der Zapfen 4 der Abdeckplatte 3 kann angeformt sein oder in Form einer Schraube angebracht sein; alternativ kann der Zapfen 4 durch eine Schraube ersetzt sein, die in einer Bohrung an Stelle des Zapfens 4 geführt ist. In bevorzugter Ausführungsform ist der Zapfen 4 durch eine Schraube ersetzt, deren Gegenstück von einer Mutter gebildet wird, die auf der gegenüberliegenden Seite des Langlochs 5 des Klingenträgers 1 angeordnet ist, um die Abdeckplatte 3 gegen den Klingenträger 1 zu pressen.

Der Klingenträger 1 ist mittels einer Haltevorrichtung 10 mit dem Reinigungselement 11 so verbunden, dass der Klingenträger 1 die Schabeklinge 2 in einem Winkel zur Ebene der Reinigungsoberfläche 12 des Reinigungselements 11 anordnet. Der Winkel zwischen der Ebene der Reinigungsoberfläche 12 und der Schabeklinge beträgt zwischen 5 und 85 Grad, vorzugsweise 30 bis 60 Grad, entsprechend der Winkel zwischen Haltevorrichtung 10 und deren Klingenträger 1 zwischen 85 und 5 Grad, vorzugsweise 60 bis 30 Grad.

Der Klingenträger 1 kann unmittelbar am Reinigungselement 11 einstückig angeformt sein, oder mittels einer Haltevorrichtung 10, die mindestens bereichsweise mit einer Oberfläche des Reinigungselements 11 verbunden ist. Bei Verwendung einer Haltevorrichtung 10 zur Verbindung des Klingenträgers 1 mit dem Reinigungselement 11 kann der Winkel des Klingenträgers 1 zur Ebene der Reinigungsoberfläche 12 dadurch eingestellt werden, dass die Haltevorrichtung 10 in einem Winkel zum Klingenträger 1 steht.

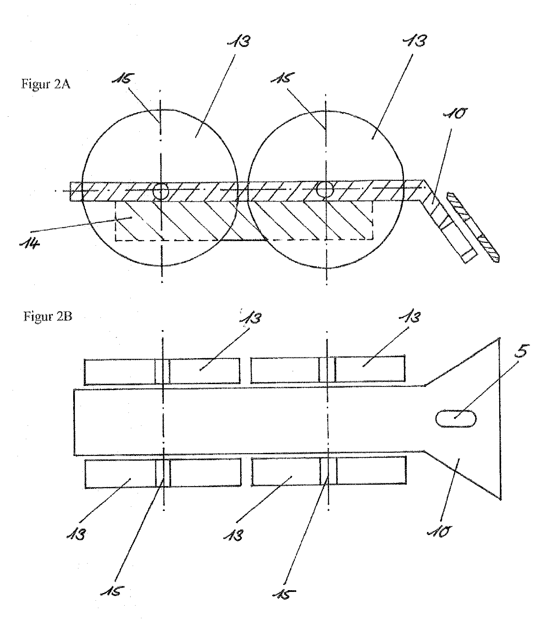

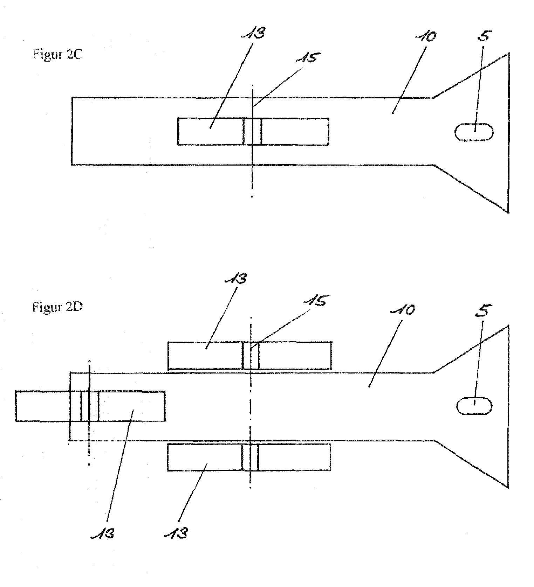

Die zweite erfindungsgemäße Ausführungsform ist in Figur 2 dargestellt, bei der die Reinigungsvorrichtung mit zumindest einem Tragrad 13 versehen ist, das so mit der Haltevorrichtung 10 verbunden ist, dass sein äußerer Umfang in der Ebene liegt, gegen die die Schabeklinge 2 federnd gehalten wird, wobei diese Ebene z.B. in der zu reinigenden Oberfläche liegt. In dieser zweiten Ausführungsform kann das Reinigungselement 11 so ausgebildet sein, dass seine Reinigungsoberfläche unmittelbar in der Ebene der zu reinigenden Oberfläche angeordnet ist. Alternativ kann das Reinigungselement 11, wie in Figur 2A dargestellt, fehlen. Ein optional an der Haltevorrichtung zu fixierendes Halteelement ist in Figur 2A gezeigt, das einen Eisenkern bzw. Magneten aufnehmen kann und/oder ausreichend Auftrieb für die Reinigungsvorrichtung bereithalten kann, dass diese ohne magnetische Anziehung in Wasser aufschwimmt. Die Anzahl der Tragräder 13 kann 1 betragen, bevorzugt sind drei Tragräder 13, besonders bevorzugt vier Tragräder drehbar mit der Haltevorrichtung verbunden, um die Haltevorrichtung 10 zu tragen, so dass die Schabeklinge 2 in einem Winkel federnd gegen die zu reinigende Oberfläche gedrückt werden kann.

Die Anzahl der Tragräder 13 kann dabei so gewählt werden, das bei Ausüben der magnetischen Anziehungskraft zwischen dem Reinigungselement 11 und dem Führungselement die Schabeklinge 2 federnd gegen die reinigende Oberfläche gedrückt wird. Im einfachsten Fall bedeutet dies, dass ein Tragrad 13 die Haltevorrichtung 10 gegen die zu reinigende Oberfläche beabstandet, so dass der gewünschte Winkel einen Klingenträger 1 bzw. Schabeklinge 2 gegen die zu reinigende Oberfläche eingestellt wird. Eine solche Ausführungsform ist in Figur 2B schematisch dargestellt.

Eine weitere Ausführungsform mit drei Tragrädern 13 ist in Figur 2C dargestellt, bei der insgesamt drei Tragräder 13 die Haltevorrichtung 10 gegen die zu reinigende Oberfläche beabstanden.

In bevorzugter Ausführungsform ist der Klingenträger 1 zumindest bereichsweise federnd ausgebildet und steht gegen die Ebene zu reinigenden Oberfläche, beispielsweise gegen die Ebene der Reinigungsoberfläche 12 oder gegen die Ebene, die von den Umfangslinien der Tragräder 13 aufgespannt wird, unter Vorspannung. Auf diese Weise wird sichergestellt, dass die Schabekante 2a durch die magnetische Anziehung zum Führungselement mit ausreichender Andruckkraft elastisch federnd gegen die zu reinigende Oberfläche z.B. einer Aquariumscheibe gedrückt wird.

In weiter bevorzugter Ausführungsform weist die Abdeckplatte 3 eine solche Abmessung auf, dass sie senkrecht oberhalb der Ebene der Schabeklinge 2 auf Höhe der Schabekante 2a angeordnet ist, wobei besonders bevorzugt die Abdeckplatte 3a eine Fase 6 in dem Bereich ihrer Kante aufweist, die an der Schabekante 2a angeordnet ist. Auf diese Weise ermöglicht die Abdeckplatte 3 einen Schutz der Schabeklinge 2, insbesondere der Schabekante 2a, gegen Schnittverletzungen, wobei die Funktion der Schabekante 2a dadurch in besonders geeigneter Form aufrecht erhalten wird, dass die Fase 6 dennoch die Zugänglichkeit der Schabekante 2a zur Entfernung von Verunreinigungen auf der zu reinigenden Glasoberfläche bzw. eine geringe Aufnahme abgeschabter Verunreinigungen und deren Wegspülen bei Bewegung der Schabeklinge 2 gewährleistet.

Zur Befestigung der Schabeklinge 2 auf dem Klingenträger 1 wird die Abdeckplatte 3 gegen den Klingenträger 1 gedrückt, beispielsweise durch eine Klemmverbindung oder eine Schraubverbindung zwischen Abdeckplatte 3 und Klingenträger 1.

Weiterhin weist die Abdeckplatte 3 einen Zapfen 4 auf, der angeformt oder in Form einer Schraube ausgeführt sein kann, der im Langloch 5 des Klingenträger 1 geführt wird und in etwa eine Bohrung der Schabeklinge 2 ausfüllt. Bei gelöster Klemmverbindung zwischen Abdeckplatte 3 und Klingenträger 1 kann die Abdeckplatte 3 mit ihrem Zapfen 4 im Langloch 5 des Klingenträgers 1 senkrecht zur Schabekante 2a geführt werden. Das Langloch 5 erstreckt sich in einer Richtung senkrecht zur Schabekante 2a innerhalb des Klingenträgers 1.

Die Verschiebung der Abdeckplatte 3 mit der von ihr überdeckten Schabeklinge 2 ermöglicht die Positionierung der Schabeklinge 2 auf dem Klingenträger 1 in eine Ruhestellung, d.h. die Schabekante 2a ist von der Ebene der Reinigungsoberfläche 12 entfernt. Entsprechend zur Reinigungsoberfläche 12 gemäß der ersten Ausführungsform, die bei der Verwendung der Reinigungsvorrichtung in der Ebene der zu reinigenden Oberfläche liegt, wird diese Ebene in der zweiten Ausführungsform von der Schabekante und der Umfangslinie des zumindest einen Tragrads aufgespannt.

Das Verschieben der Abdeckplatte 3, geführt durch deren Zapfen 4 innerhalb des Langlochs 5, in Richtung auf die Ebene der zu reinigenden Oberfläche zu, ermöglicht die Positionierung der Schabekante 2a gegen die Ebene der zu reinigenden Oberfläche federnd gedrückt ist, sodass auch dadurch die Vorspannung einstellbar ist, mit der die Schabkante 2a federnd gegen eine Oberfläche drückt, die in der Ebene der zu reinigenden Oberfläche, z.B. der Reinigungsoberfläche 12 angeordnet ist.

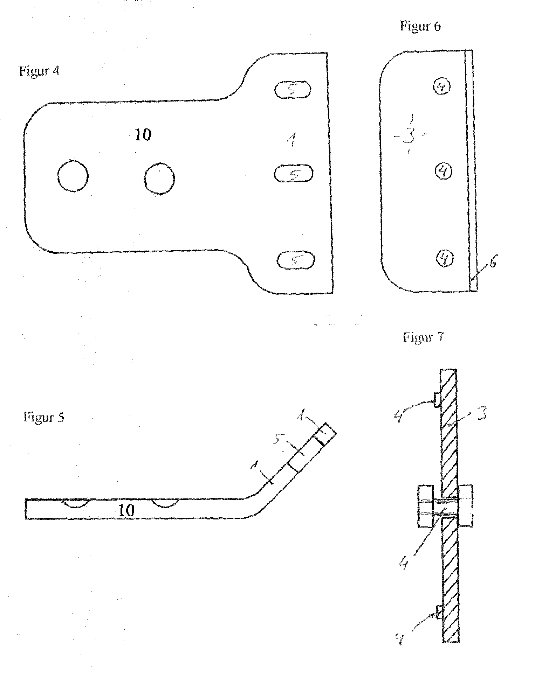

Eine alternative Ausführungsform der Anordnung des Klingenträgers 1 an einer Haltevorrichtung 10 ist in Figur 3 gezeigt. Auch in dieser Ausführungsform ist die Schabeklinge 2 parallel zum Klingenträger 1 in Richtung auf die Reinigungsoberfläche 12 des Reinigungselements 11 gerichtet, ebenfalls in einem Winkel zur Ebene der Reinigungsoberfläche 12. Bei dieser Ausführungsform ist es bevorzugt, dass die Kante der Abdeckplatte 3, die parallel zur Schabekante 2a verläuft, nicht nur auf der der Schabekante 2a zugewandten Seite angefast ist, sondern auf der gegenüberliegenden Seite eine Fase 6' aufweist, um das Aufliegen der Schabekante 2a auf einer zureinigenden Glasoberfläche z.B. in der Ebene der Reinigungsoberfläche 12, nicht zu beeinträchtigen.

Figur 4 zeigt eine Aufsicht auf einen Klingenträger 1 mit angeformter Haltevorrichtung 10. Die Langlöcher 5 sind als Beispiel in einer Anzahl von drei dargestellt, sodass eine zugehörige Abdeckplatte 3 eine gleiche Anzahl von Zapfen 4 aufweisen kann, wobei zumindest einer der Zapfen 4 durch eine Schraube gebildet werden kann, die mit einer auf der gegenüberliegenden Seite angeordneten Mutter in Eingriff treten kann.

In Figur 6 ist schematisch die Aufsicht auf eine Abdeckplatte 3 gezeigt, die beispielhaft entsprechend des in Figur 4 dargestellten Klingenträgers 1 ebenfalls drei Zapfen 4 aufweist. Wie in Figur 7 deutlich wird, kann der mittlere Zapfen 4 als Bohrung mit hindurchgeführter Schraube ausgeführt sein, die auch durch das deckungsgleiche Langloch des Klingenträgers 1, beispielsweise durch das mittlere Langloch des Klingenträgers 1 von Figur 4 geführt werden kann, um auf der gegenüberliegenden Seite mit einer Mutter in Eingriff zu treten.

Die Abdeckplatte 3 weist auf der Seite, auf der die Zapfen 4 angeformt sind, die Fase 6 auf, die einen Freiraum zwischen der Schabekante 2a und dem Material der Abdeckplatte 3 herstellen soll, wenn die Abdeckplatte 3 in der erfindungsgemäß bevorzugten Ausführungsform so dimensioniert ist, dass sie bei Fixierung der Schabeklinge 2 eine parallel zur Schabekante 2a verlaufende Kante aufweist. Für eine Ausführung entsprechend Figur 3 liegt die Fase 6' auf der den Zapfen gegenüberliegenden Seite der Abdeckplatte 3.

### Bezugszeichenliste

Klingenträger 1
Schabeklinge 2
Schabekante 2a
Abdeckplatte 3
Zapfen 4
Langloch 5
Fase 6, 6'
Haltevorrichtung 10
Reinigungselement 11
Reinigungsoberfläche 12
Tragrad 13
Halteelement 14
Achse 15 des Tragrads

## Patentansprüche

1. Reinigungsvorrichtung für einen magnetischen Scheibenreiniger, die magnetisch zu einem Führungselement anziehbar ist, **gekennzeichnet durch** eine Haltevorrichtung (10), die einen in einem Winkel angeordneten Klingenträger (1) mit mindestens einem Langloch (5) und eine Abdeckplatte (3) mit mindestens einem in dem Langloch führbaren Zapfen (4) aufweist, wobei zwischen dem Klingenträger (1) und der Abdeckplatte (3) auf dem Zapfen (4) eine Schabeklinge (2) angeordnet werden kann und die Abdeckplatte (3) zusammen mit der Schabeklinge (2) gegen den Klingenträger (1) verschieblich ist.

2. Reinigungsvorrichtung nach Anspruch 1, **dadurch gekennzeichnet, dass** die Haltevorrichtung (10) mit einem Reinigungselement (11) verbunden ist, das eine Reinigungsoberfläche (12) in der Ebene aufweist, gegen die die Schabeklinge (2) federnd angeordnet werden kann.

3. Reinigungsvorrichtung nach Anspruch 1, **dadurch gekennzeichnet, dass** die Haltevorrichtung (10) mit zumindest einem drehbar gelagerten Tragrad (13) verbunden ist, dessen Drehachse (15) parallel zur Schabekante (2a) der Schabeklinge (2) angeordnet ist.

4. Reinigungsvorrichtung nach Anspruch 3, **dadurch gekennzeichnet, dass** zwei, drei oder vier Tragräder (13) mit der Haltevorrichtung (10) verbunden sind.

5. Reinigungsvorrichtung nach Anspruch 3 oder 4, **dadurch gekennzeichnet, dass** die Haltevorrichtung (10) ein Halteelement (14) aufweist, wobei die Achsen (15) für Tragräder (13) in dem Halteelement (14) und/oder der Haltevorrichtung (10) angeordnet sind.

6. Reinigungsvorrichtung nach einem der vorangehenden Ansprüche, **dadurch gekennzeichnet, dass** ein Magnet oder Eisenkern in der Haltevorrichtung (10) angeordnet ist.

7. Reinigungsvorrichtung nach einem der Ansprüche 3 bis 6, **dadurch gekennzeichnet, dass** ein Magnet oder Eisenkern in einem Tragrad (13) und/oder einem Halteelement (14) angeordnet ist.

8. Reinigungsvorrichtung nach einem der vorangehenden Ansprüche, **dadurch gekennzeichnet, dass** die Abdeckplatte (3) an ihrer Längskante, die an der Schabekante (2) der Schabeklinge (2) benachbart angeordnet ist, eine Fase (6, 6 ') aufweist.

9. Reinigungsvorrichtung nach einem der vorangehenden Ansprüche, **dadurch gekennzeichnet, dass** mindestens einer der Zapfen (4) durch eine Bohrung in der Abdeckplatte (3) und eine durch diese Bohrung, eine Bohrung in der Schabeklinge (2) und das Langloch (5) hindurchgeführte Schraube ersetzt ist.

10. Haltevorrichtung (10) zur Verwendung mit einer Reinigungsvorrichtung nach einem der vorangehenden Ansprüche, **gekennzeichnet durch** einen in einem Winkel angeordneten Klingenträger (1) mit mindestens einem Langloch (5) und eine Abdeckplatte (3) mit mindestens einem in dem Langloch führbaren Zapfen (4), wobei zwischen dem Klingenträger (1) und der Abdeckplatte (3) auf dem Zapfen (4) eine Schabeklinge (2) angeordnet werden kann und die Abdeckplatte (3) zusammen mit der Schabeklinge (2) gegen den Klingenträger (1) verschieblich ist.
